Europäisches Patentamt

European Patent Office

Office européen des brevets

(11) Publication number: **0 036 397**
A1

## (12) EUROPEAN PATENT APPLICATION

(21) Application number: 81830041.0

(22) Date of filing: 13.03.81

(51) Int. Cl.³: **C 04 B 41/28**
B 28 B 11/04, B 27 K 3/00

(30) Priority: 14.03.80 IT 4815580

(43) Date of publication of application:
23.09.81 Bulletin 81/38

(84) Designated Contracting States:
AT BE CH DE FR GB LI LU NL SE

(71) Applicant: Mura, Mariano
Via Francesco Ferrara, 24
I-00191 Roma(IT)

(71) Applicant: Mazzanobile, Aldo
Via Consolare Latina, 189
I-00176 Colleferro/Roma(IT)

(72) Inventor: Mura, Mariano
Via Francesco Ferrara, 24
I-00191 Roma(IT)

(72) Inventor: Mazzanobile, Aldo
Via Consolare Latina, 189
I-00176 Colleferro/Roma(IT)

(74) Representative: Fontana, Sergio
c/o Studio Köhler Fontana Via G. Calderini, 19
I-00196 Roma(IT)

(54) Procedure for impregnating concrete and other materials plus devices to perform said procedure.

(57) The procedure according to this invention applies to the polymerization of catalyzed organic monomers, preferably with saturated pressurized steam. Alternatively, instead of steam, hot water treated with a neutral organic salt may be used. In both cases, the medium is recovered and re-used in the cycle.

To perform the complete procedure, the invention provides for a treatment of plant or yard prefabricated objects in which they are successively passed through a drying tunnel, into a vessel containing the catalyzed monomer, into a chamber containing steam or treated hot water for the polymerization, and finally into a radiant heated area.

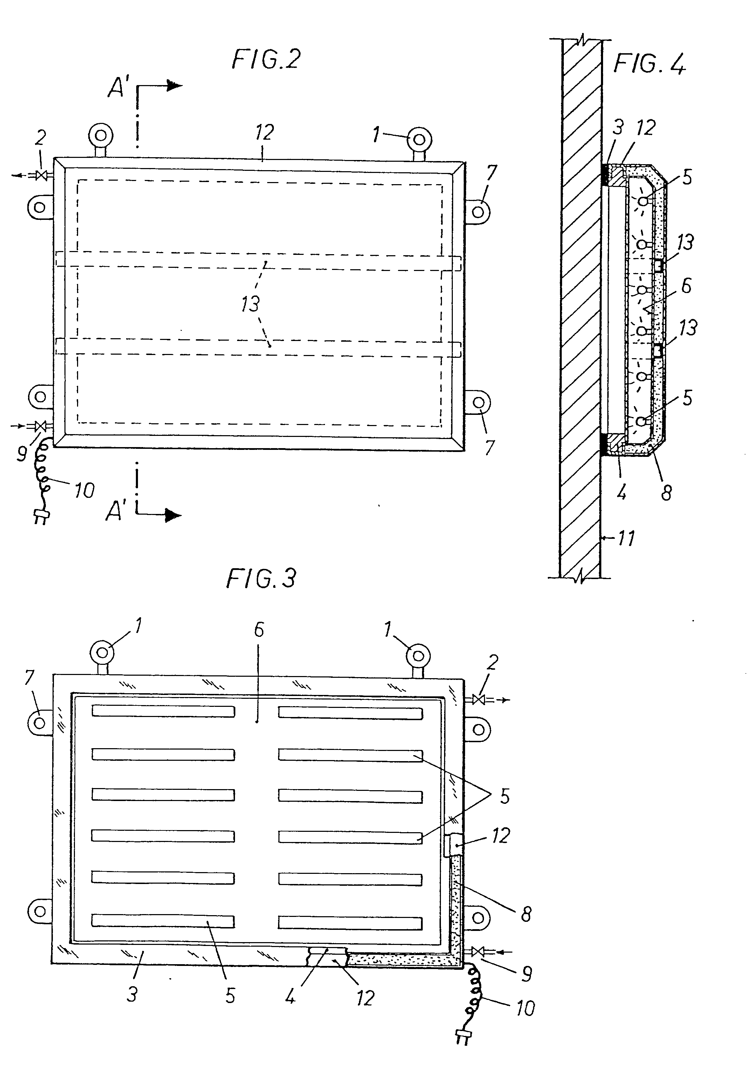

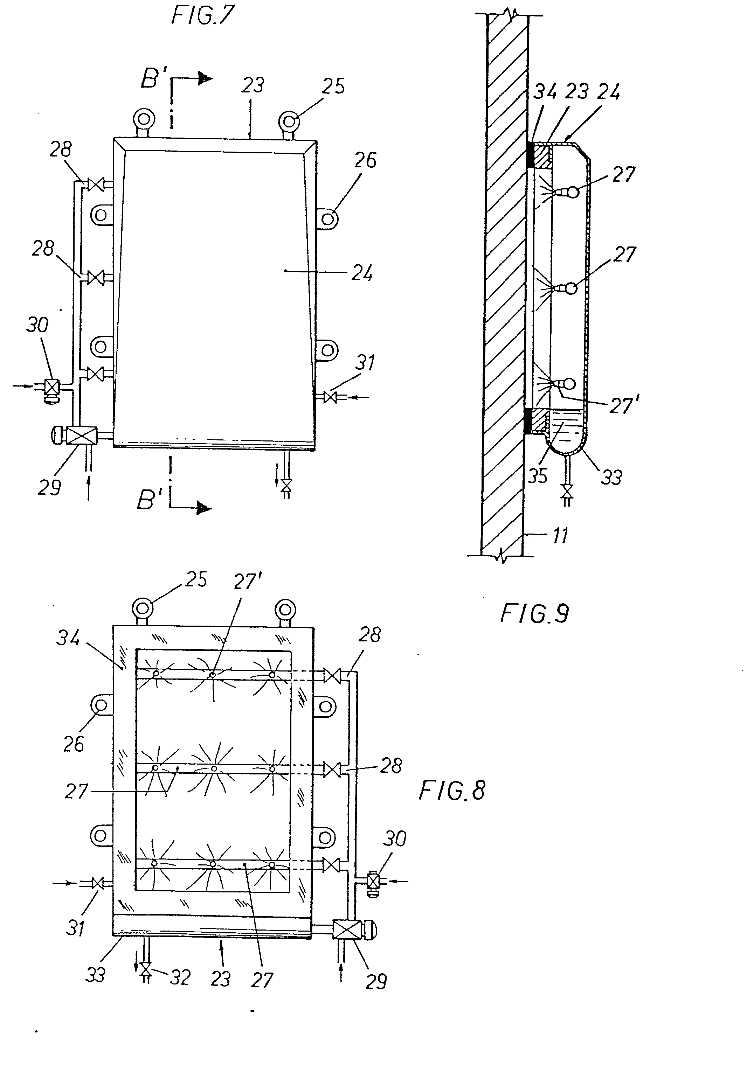

For objects cast in situ, the invention provides for the use in successive phases of a series of mobile heat radiating panels, or of monomer containers, either with steam or treated hot water, according to the specific treatment phase. (Figs. 3,8)

EP 0 036 397 A1

./...

FIG.3

FIG.8

Procedure for impregnating concrete and other materials plus devices to perform said procedure

Mariano MURA, Aldo MAZZANOBILE

This invention concerns a procedure for impregnating concrete and other materials through the polymerization of organic monomers of relatively low viscosity absorbed by prefabricated or in situ cast objects of any type made of cement mixture or of other composition and materials such wood, plaster, clay, etc. They are pre-treated, and then must be treated thermally using saturated pressurized steam or treated hot water. Systems for carrying out said procedure are also included.

It is known that the technique of introducing relatively low viscosity resins, for example, organic in type, as monomers in the presence of catalysts into a porous material such as concrete, for example, and of then polymerizing them confers on the composite products obtained properties which distinguish it from a material characterized by the simple sum of the properties of the materials used to make it.

This is due to the fact that the poor mechanical resistance and durability of normal products in concrete, ceramic or other construction material depends essentially

on their porosity.

The already known concept of drastically reducing this porosity through the injection of a liquid substance which in the course of treatment solidifies inside the article is thus without doubt the best solution for achieving better mechanical resistance and superior durability.

It is a known technique to previously dry the material to be treated in order to allow the maximum absorbance of the catalyzed resin by the material and then to polymerize said resin.

In current practice, therefore, in the first operating phase the object made of cement mixture or of other composition is dried (dehydration). For both pre-fabricated and in situ cast goods, this dehydration takes place through exposure to sources of heat.

In a second operating phase (absorption), if the object made of cement mixture or of other composition is pre-fabricated, it is immersed in a bath of catalyzed monomer, for example resin, in an appropriate vessel at a determined temperature. In this way, the monomer is absorbed by the object by capillary action. On the other hand, if the object is cast in situ, it is treated in successive areas by spraying resin on the part to be impregnated or by continuous bathing of the same area.

In order to prevent the impregnating substance from coming out the pores of the object later, in a third operating phase (polymerization), the prefabricated object is immersed in a bath of non-treated hot water or of a gas. An in situ cast article is treated analogously.

Finally, again according to current techniques, in a fourth phase (drying) the prefabricated or in situ cast object is exposed to the same sources of heat as in the first phase, but at reduced temperatures.

As the technique is currently applied, the third operating phase (that is, polymerization) nevertheless presents some inconveniences. These include the necessity of using large quantities of water, often unavailable in certain areas, the loss of these quantities after use, and contributing to the pollution of the environment with the polymerization substances, which are furthermore not biodegradable. Finally, in the case of treatment with gas, there are serious difficulties of cost and supply.

The aim of this invention is thus to intervene in the third operating phase by proposing a procedure for polymerizing relatively low viscosity organic monomers absorbed by previously treated objects later to be subjected to heat treatment, which are made of cement mixtures or are of other composition, with materials like wood, plaster, clay, etc. The procedure will not require large amounts of water, will not pollute the surrounding envir-

onment, will not encounter difficulties of cost and supply, and will allow all the medium used for polymerization of said resin to be recovered and re-used in the cycle. That is, by fixing these resins in the pores of the material used, its loss is prevented, and its mechanical resistance and durability properties are thus ensured.

A further aim of the invention is to propose devices for carrying out the entire treatment procedure for objects as described above, in all four of the treatment phases, such that saturated pressurized steam or treated hot water may be used alternatively in the third phase, leading to a final result in perfect harmony and correspondence with the specific traetment procedure provided for the third phase.

The invention achieves this goal by preferably using saturated pressurized steam, but also as an alternative treated hot water, to effect the polymerization of the organic monomers, recovering this medium when the procedure is finished and re-placing it in the cycle. Furthermore, for performing the entire procedure, systems are used to effect a dehydration and absorption which perfectly satisfy the requirements of the subsequent polymerization, as well as a drying which guarantees an unexceptionable and excellent result when the procedure is completed.

The fundamental concept of the invention lies in the observation that steam held constantly under pressure and so saturated with air molecules constitutes a suitable hydraulic batten on the surface of the article and so prevents the loss of the monomer through the pores of the concrete, as well as in the observation that by increasing the pressure of the saturated steam, the polymerization times are strikingly reduced, even up to 50% with respect to those when simple hot water is used. The fundamental concept of the invention also lies in the fact that hot water suitably treated with a neutral organic salt causes the precipitation of the resin particles in suspension in the liquid. Otherwise, these latter could adhere to the surface of the object to degrade its quality and could enter into the treatment circuit to obstruct and block the pumps and apparatus through subsequent incrustation.

According to the invention, the use of saturated pressurized steam or of treated water has the double aim of preventing the loss by evaporation of the absorbed resin and at the same time of supplying very quickly the quantity of heat required to polymerize the catalyzed resin inside the concrete itself or the impregnated material.

According to the invention, as already mentioned, the polymerization may involve both prefabricated and in situ cast objects, such as concrete roads, maritime or hydraulic works, columns, slabs and bearing structures in general, concrete works and military fortificaitons, bridges, etc., using both a medium like saturated pressurized steam and suitably treated hot water.

The procedure according to the invention provides preferably for the use of saturated pressurized steam whenever possible, for example, in the plants for producing the prefabricated objects where such a system is already in place for accelerated aging of the goods or in special mobile or fixed installations in the yard where the objects are cast in situ. In fact, the saturated pressurized steam always presupposes the necessity of limited quantities of water. Furthermore, by increasing the steam pressure, as already mentioned, the polymerization operation times may be strikingly reduced (up to 50%) and so said operation may be accelerated. The steam exerts a uniform pressure on all parts of the object, and prevents the leakage and sweating of the resin from the object. This prevents the formation of residual particles as occurs even with treated hot water.

Another advantageous aspect of the invention lies in the alternative use of hot water suitably treated with neutral organic salt. In fact, whenever fixed or mobile steam installations are not available, this alternative in any case allows, thanks to the presence of the neutral organic salt, the precipitation of the residual particles of resin on the bottom of the vessel, which may be removed and replaced periodically. In this way, pollution of the surrounding environment can be prevented, along with the need for installations of considerable dimensions for water treatment. Consequently, it will be sufficient to add water to bring it up to the desired level as needed, leading to a considerable savings of liquid.

With regard to the devices for performing all four phases of the procedure, the invention provides a treatment of both perfabricated objects and those cast in situ.

In the case of objects prefabricated in a production plant or yard, the invention provides that they are first of all passed through a tunnel for heating and drying, with temperatures up to 140-160°C. The tunnel is made of an insulating or metallic material, and is provided with already known equipment to recycle the heat produced with infrared rays or hot air. The dimensions, naturally, may vary as required.

Successively, for the impregnation (absorption) the object is immersed in a vessel containing the catalyzed monomer, made of either concrete or steel. The vessel is either buried or above ground, and is provided with known equipment for charging, discharging, filtering and recycling the monomer. The dimensions are variable, as required.

The third phase of the object's treatment is then begun, in a perfect sealing steam chamber with a maximum temperature of 130-150°C and a maximum pressure of 2-3 atmospheres. The steam chamber is made of insulated metallic material, and is provided with automatic pressure regu-

lating valves as well as equipment for recovering and recycling the steam, valves, gates and a system for discharging the condensate, and accessories. All the above are already known. In this case as well the dimensions are variable, depending on the requirements. In case steam is unavailable, a concrete or metallic vessel is used containing hot water treated with a neutral organic salt. This is equipped with hydraulic battens of a suitable size for the object and the quantity of water the vessel can hold. Temperatures up to 60-90$^{o}$C are used. The vessel will be equipped with a suitable container for removing particles of precipitated resin.

Finally, the object is passed through a second heating tunnel completely identical to the first, cited above. Temperatures are also the same, and the dimensions are again variable depending on the requirements.

In the case of objects cast in situ, the invention provides for mobile heat radiating devices, or containers of the organic monomer to be impregnated either using saturated pressurized steam or treated hot water, to be applied to the object by successive areas, in progressively successive times, in conformance with the phases illustrated above.

In the first phase (dehydration), a mobile radiant panel is used comprising a bearing framework of light metal which has along its length transversal metallic bracing.

The upper edge is equipped with rings for raising the panel to the necessary height, while the lateral edges are equipped with metallic organs for fixing the panel to the structure to be treated. The inside of the peripheral frame of the framework contains a heat insulating material. The surface of the panel facing the surface of the object to be treated is equipped with infrared lamps and is held at a distance from it by a special perimetrical gasket. The latter is heat resistant to prevent loss, and is arranged on an internal frmaework with metallic bracings comprising the bearing structure. The surface opposite that facing the part of the article to be treated consists of a reflecting metal sheet casing. Fianlly, corresponding to the lower area of one of the side edges, there is a coupling for electricity supply and an opening for injecting hot air in the carter, in the case of the alternative method. Corresponding to this opening for air injection, near the upper area of the same lateral edge, there is an outlet for the hot air ventilation and recovery.

Once the panel is raised to the desired height with said rings and secured to the object with said metallic organs, the heat generated by the infrared radiation or by the hot air ventilation acts to dehydrate the area. One then proceeds to successive areas to complete the treatment of the entire surface of the object.

Always in successive operations, one proceeds in the second phase to the impregnation (absorption) of the object, using a type of mobile panel which varies according to whether the operation must be effected on a horizontal or vertical surface of the object.

In the first case, one uses a mobile panel comprising a metallic framework as bearing structure, in the shape of a frame, which is placed on the horizontal surface of the object to be treated using a perimetrical sealing gasket. Since the frame-shaped framework is of a certain height, a type of basin is formed around the area to be treated, into which one places in any way desired the catalyzed monomer to be absorbed by the object and then removed. Rings are provided on the short sides of the panel, conveniently set apart, for raising and moving it. Along the long sides of the panel, one carriage runs its entire length along suitable tracks. This one in turn carries along its own length tracks in which a second carriage runs from one end to the other. The two carriages can thus run in reciprocally opposite senses longitudinally and transversely with respect to the panel. The second carriage is equipped with an aspiration pump to which a rose pipe is hydrodynamically connected which may be adjusted in height. The latter serves to aspirate and recover the non-absorbed catalyzed monomer at the end of the absorption phase. The aspiration pump and rose pipe can operate in this way to recover the monomer anywhere within the perimeter of the panel, whatever the coordinates.

In the second case, that is for operating along a vertical surface, one uses a mobile panel made like a light metallic framework which comprises the bearing structure, in the form of a carter drawn from stamped or molded light metal sheet. The monomer for impregnating the object is collected in this carter. On the top, the mobile panel has lifting rings, and, along the lateral edges, are metallic organs for securing to the vertical structure to be treated. Transversely, between one branch of the panel and another, there are rods shaped like metallic tubes with pressure sprayers to spray the monomer on the walls to be treated. In the back, that is on the side opposite to that of the surface to be treated, the panel is closed by said carter in stamped or molded sheet. Along one of the vertical edges of the panel, a tubing outside of the panel equipped with gates and valves for delivering the monomer is connected hydrodynamically to said rods with sprayers. A pump for monomer delivery in a pressurized system is attached to the end of this tubing. The pump in turn is connected to a pipe for supplying the monomer. Just above said delivery pump, a valve for air to enter the inside of the panel is provided, for eventual climatization of the monomer. At the lower end of the carter there is a reservoir to collect the monomer which, after the action of the sprayers above, flows and drips along the walls which must absorb it. Finally, there is an outlet valve for the monomer at the end of treatment.

The panel made in this way is raised to the height neces- esary for treatment and secured to the walls to be treated using the special rings and metal organs. The panel rests against the wall using a perimetrical sealing gasket applied to the light metal framework which comprises the structure. The pump draws the monomer from the source of supply and delivers it under pressure, making it spray out of the special sprayers. In this way, it flows and drips along the wall of the object which must absorb it. When the operation on the treated area is finished, the panel is moved to the next area to be treated.

In the third phase, the catalyzed monomer absorbed by the object is polymerized. Always proceeding by successive areas, one uses a panel containing saturated pressurized steam for both vertical and horizontal areas. However, when hot water treated with a neutral organic salt must be used, again according to the invention, one uses the same panel described above for impregnating vertical areas of the object with the monomer.

In the case where saturated pressurized steam is used, the invention provides for a panel comprising a framework with metallic cross pieces to form the bearing structure. In analogy with the preceding cases, the panel is equipped with rings for lifting along the upper edge and with metal organs for securing to the object to be treated along the lateral edges. In this case also, a sealing gasket is provided along the perimetrical edge of the panel to form the support on the surface to be treated. The panel is open on the side facing the surface of the object to be treated and closed on the other side by a carter which is light metal or plastic on the outside. This is equipped along the rear wall with an insulating layer to prevent heat dispersions. Near the lower end of one of the edges, there is an inlet for steam supply equipped with a delivery pump, in turn connected to a steam source. Near the upper end of the same edge there is a steam outlet for its re-use, while below the carter an exhaust valve for condensed steam is fitted. On the inside, the panel is made of plastic or of anticorrosive metal sheet.

In performing this third phase one proceeds by successive areas, raising the panel using the special rings and securing it to the part to be treated with the special metal organs. The pump injects into the area enclosed by the part to be treated and the panel saturated pressurized steam to effect the polymerization of the previously absorbed catalyzed monomer. The steam is recovered at the special outlet and re-used for the next treatment.

As already specified above, when hot water treated with a neutral organic salt must be used instead of steam, according to the invention, one uses the same type of panel used for the impregnation in a vertical position of the object with the catalyzed monomer.

Finally, in the fourth operating phase, the impregnated object is dried using a panel of the same type and functioning in the same way as that used in the first phase to dehydrate the object.

The advantages arising from this procedure and the devices for performing it proposed by the invention seem evident. By using saturated pressurized steam, evaporation of the resin from the object is prevented. Furthermore, shrinking of the resin with damage to the object is prevented, and so residues of resin particles lost upon discharge are avoided. As a consequence, there is no pollution of the surrounding environment. Since the steam is constantly under pressure and is saturated with air molecules, it exerts pressure on the object which prevents leakage of the resin and its loss through the pores of the object. By increasing the pressure of the saturated steam, polymerization times are strikingly reduced (up to 50%) with rspect to those observed with normal water. Finally, steam is readily available in production plants, and is readily recovered and recycled. It may also be drawn from the discharge from other industrial installations near the production point, and allows the object to complete the cycle of artificial aging which it underwent in the industrial production phase.

Whenever circumstances require the alternative use of hot water treated with a neutral organic salt, it causes the precipitation of the resin particles in suspension. These can be removed periodically so that the water used will be readily recoverable for re-insertion in the cycle, with considerable saving in liquid plus non-pollution of the environment as a consequence.

The devices proposed by the invention for performing the procedure in turn allow rapid and effective operation. These are in fact applied in ordered and systematic progression by areas. In this way, the objects are effectively predisposed to impregnation, and, above all, a radical polymerization of the catalyzed monomer is run and the treatment cycle is concluded in the final phase. At the same time, operating times are accelerated and the objects are protected against the dangerous effects of residual resin particles. Finally these allow recovery to the maximum degree possible of the systems used for the procedure; these are then re-inserted in the cycle.

The invention will now be illustrated in more detail with reference to a preferred form shown as a non-limiting example in the attached drawings, the figures in which are described below.

Figure 1 shows a schematic block view of the phases of the procedure according to the invention, applied to objects prefabricated in a production plant or yard.

Figure 2 is a frontal view of a mobile panel used for the first phase of the procedure applied to objects cast in situ, as well as for the fourth phase (drying) from the side opposite the object.

Figure 3 shows a frontal view of the panel in figure 2, of the side facing the surface of the object to be treated.

Figure 4 shows a section along line A-A' of the panel of figure 2.

Figure 5 shows a frontal view of a mobile panel used for the second phase of the procedure on objects cast in situ, arranged horizontally, with the two carriages moveable in an orthogonally reciprocal sense.

Figure 6 shows a view of the panel of figure 5 from the top.

Figure 7 gives a frontal view of a mobile panel used for the second phase of the procedure applied to objects cast in situ, arranged vertically, as well as for the third phase of the same procedure, when treated hot water is used, from the side opposite the object.

Figure 8 shows a frontal view of the panel of figure 7, from the side facing the surface of the object to be treated.

Figure 9 shows a section along line B-B' of the panel of figure 7.

Figure 10 is a frontal view of a mobile panel used for the third phase of the procedure (with saturated steam) applied to objects cast in situ, arranged both horizontally and vertically, from the side opposite the object.

Figure 11 shows a frontal view of the panel of figure 10, from the side facing the surface of the object to be treated.

Figure 12 shows a section along line C-C' of the panel of figure 10.

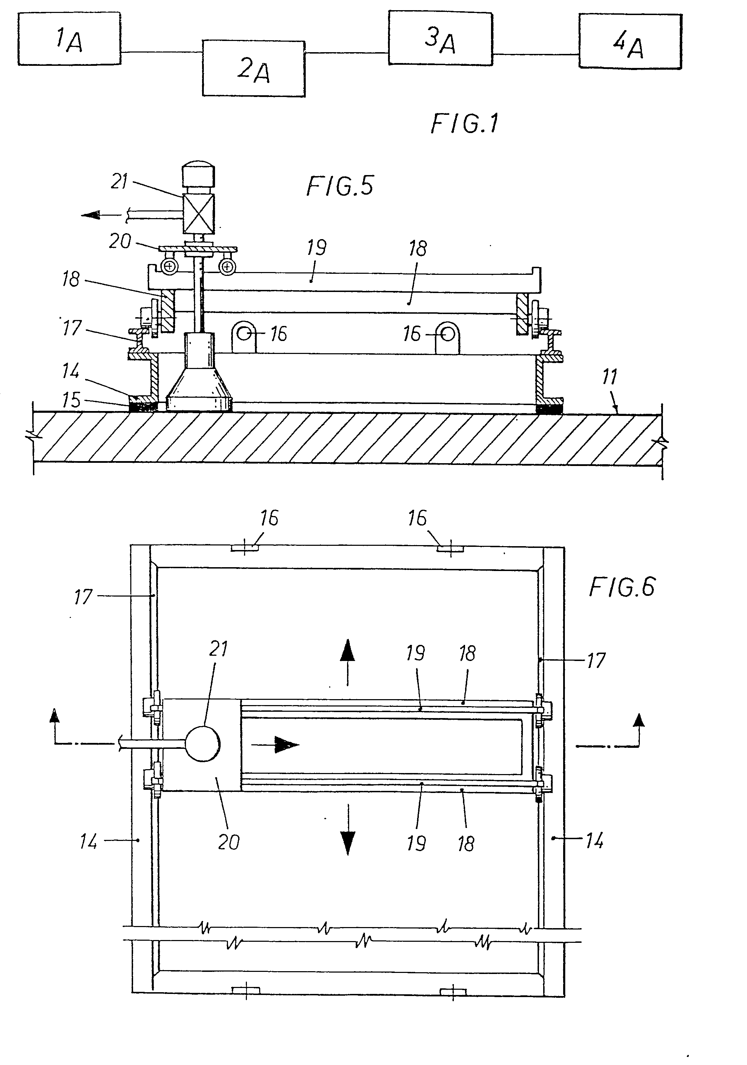

In figure 1, the phases of the procedure according to the invention are represented schematically for objects prefabricated in production plants or yards. 1A indicates the tunnel, of dimensions appropriate to the requirements of the specific case, for heating and dehydration at temperatures up to 140-160°C, made of brickwork or an insulated metallic material. Omitted from the drawing is the equipment, already known, for recycling the heat produced with infrared radiation or hot air. 2A is the basin, in concrete or steel, buried or not, of dimensions appropriate to the requirements of the specific case, in which the impregnation of the object occurs. Also omitted from the drawing is the already known equipment for charging, discharging, filtering and recycling of the monomer. 3A indicates a steam chamber of suitable dimensions, perfect sealing, made of insulated metallic material, where the monomer absorbed by the object is polymerized at temperatures up to 130-150°C and with maximum pressures of 2-3 atmospheres. Here as well the already known equipment has been omitted from the drawing, represented by automatic pressure regulating valves, by elements for steam recovery and recycle, and by valves and gates for removal of the condensate. This same block 3A, in the case where hot water treated with a neutral organic salt is used, represents a concrete or metallic material basin to hold said liquid with suitable hydraulic battens and at temperatures from 60 to 90°C, equipped with a container for removing the particles of precipitated resin. Finally, 4A indicates a tunnel for drying the object, identical in characteristics and function with 1A.

Figures 2, 3 and 4 show a mobile panel for performing the first phase of the operation according to the invention, that is, for heating and dehydrating, in successive areas, an object cast in situ. The same type of mobile panel is used in the fourth phase, that is, in drying the object after impregnation and polymerization are finished.

In these figures, the bearing framework of light metallic structure is indicated with 12, the internal metallic transverse supports with 13, the internal metallic framework comprising the bearing structure with 4. The rings for lifting the panel are indicated with 1, the metallic organs for securing it to the structure to be treated with 7, for example using rivets shot into it. The reflecting carter in metallic sheet is indicated with 6, and the thermal insulation outside the carter with 8. 9 marks the inlet opening for the hot air supply, and 10 the coupling for supplying electricity. The hot air outlet for the ventilation and recovery of same is indicated with 2. The infrared lamps for producing heat, as an alternative to hot air, are indicated with 5. The panel is thus raised to the necessary height and supported against the surface to be treated 11 of the concrete (or other material specified above) object through the special heat resistant perimetrical gasket 3. The effects of the heat, generated either by infrared lamps 5 or by hot air injected through hole 10, are felt inside the space enclosed between the surface to be treated 11 and the panel, surrounded by the perimetrical gasket 3 acting on said surface of the object. When surface 11 has been treated, the panel is moved to a successive surface, taking care not to leave surfaces between one area and the next, even very small ones, which do not undergo treatment.

Figures 5 and 6 show a type of mobile panel for impregnating objects cast in situ, arranged in a horizontal position. The panel comprises a metallic framework 14 as bearing structure, in the shape of a frame, which is placed on the horizontal surface to be treated 11 of the object through a sealing perimetrical gasket 15. Said framework 14 is suitably sized in height so as to form a container for the catalyzed monomer, injected as desired, which must be absorbed by the object and then removed. The short sides of the panel are provided with conveniently placed rings 16 for lifting and moving it. The long sides of the panel are equipped with tracks 17 along which a carriage 18 runs its entire length. This in turn has running lengthwise along it tracks 19, along which a carriage 20 runs its entire length, in an orthogonal sense to carriage 18. An aspiration pump 21 is on the second carriage, to which is hydrodynamically connected a rose pipe 22, adjustable in height, in a known fashion, which serves to aspirate and recover the non-absorbed catalyzed monomer at the end of the impregnation phase. After the monomer has been injected into the panel and the impregnation period has passed (dependent on the porosity of the material to be treated), the pump 21 and rose pipe 22 complex is shifted longitudinally and transversely on the panel using carriages 18 and 20. Since the height of rose pipe 22 is adjustable, it will be possible to remove all the monomer not absorbed by the object.

Figures 7, 8 and 9 show a type of mobile panel for impregnating objects cast in situ, arranged vertically. The panel is also to be used in the third phase of the procedure, that is polymerization, in the case where hot water treated with a neutral organic salt is used. The panel represented in said figures comprises a light metallic franework 23 which makes up the bearing structure in the form of a carter 24 stamped or molded in light metallic sheet in which the monomer used to impregnate the object is collected (or the treated hot water for the polymerization). On the top, the panel has rings 25 for lifting it and, along the lateral edges, it has metallic organs 26 for securing it to the vertical structure to be treated.

The internal rods in metallic tubing 27 are shown transversely, equipped with pressure sprayers 27' to spray the monomer (or treated hot water) on the wall 11 to be treated. Along the vertical edges of the panel is shown an external tubing 28 for delivery of the monomer (or the treated hot water), equipped with gates and valves not shown in the drawing. This tubing is connected hydrodynamically with metallic tubes 27 bearing sprayers 27'. A pump 29 is connected at the end of external tubing 28 for delivery of the monomer (or treated water) into the cycle under pressure. The pump in turn is connected to a supply pipe 30 for the monomer (or treated water), just barely alluded to in the drawing. At the bottom end of the carter 24, the discharge valve for the monomer (or treated water) at the end of the treatment is indicated with 32. Finally, the bottom basin 33 serves to collect the monomer (or treated hot water) which runs and drips along the walls to be treated after sprayers 27' are activated. The panel is raised to the necessary height with rings 25 and secured to the surface 11 with metallic organs 26. The panel is supported against said surface 11 with the sealing perimetrical gasket 34. Pump 29 sends the monomer (or treated water) under pressure with sprayers 27' against the surface to be treated, and the liquid runs and drips to be collected in basin 33, the level of which is indicated with 35 in figure 9. From basin 33, the liquid is reabsorbed and re-inserted in the cycle by pump 29. Once the operation on said surface 11 is complete, the panel is moved to another area to continue treatment.

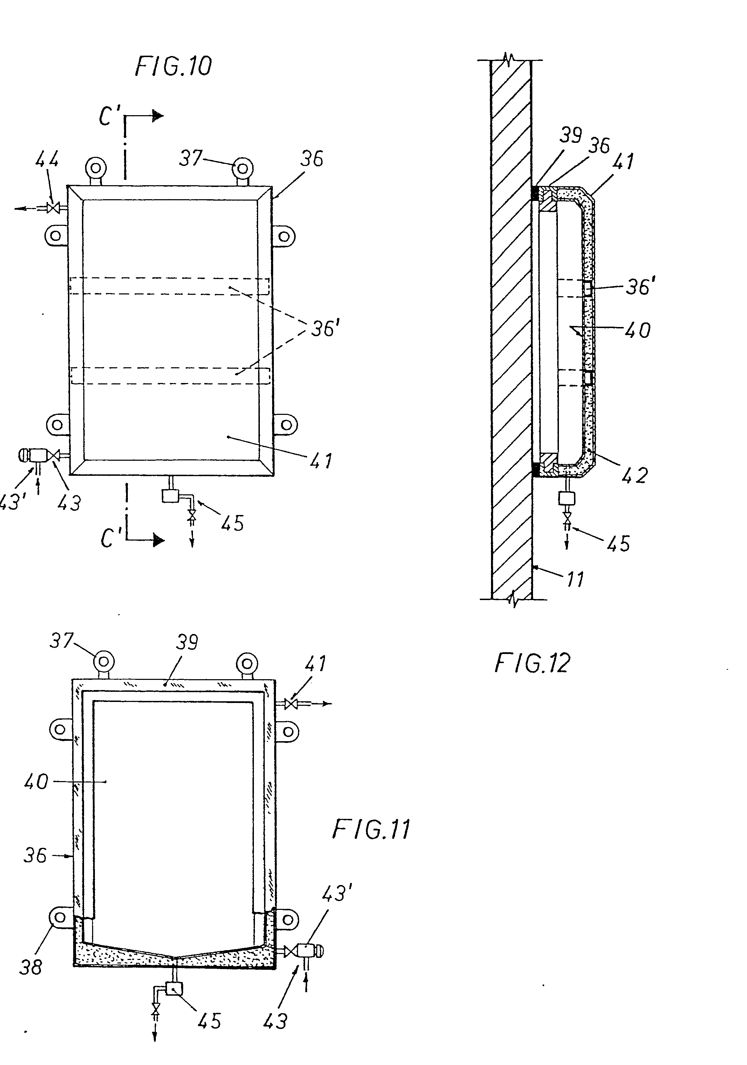

Figures 10, 11 and 12 show a mobile panel for the polymerization with saturated steam of the object cast in situ, arranged either horizontally or vertically. In analogy with those described above, this panel comprises a framework 36 with metallic cross beams 36' to form the bearing structure. The panel is equipped with rings 37 on the upper edge for raising it, and with metallic organs 38 along the vertical edges for securing it to the object to be treated 11. Around the perimeter of the panel there is a sealing gasket 39 for supporting it on the surface 11 to be treated. On the side opposite that facing the surface 11, the panel is closed by a carter 40 in light metallic or plastic material. Along the rear wall 41, the carter is equipped with an insulating layer 42. Near the lower end of one of the edges, there is an inlet 43 for steam supply from delivery pump 43' for the saturated steam. This in turn is connected to the steam source, not shown in the drawing. Near the upper end of the same edge there is a steam outlet 44 for its re-use. On the bottom part of the carter there is a discharge valve 45 for the condensed steam. On the inside, the panel is made of plastic material or anticorrosive metallic sheet. The panel is raised with rings 37 to the necessary height, and secured with organs 38 to the surface 11 to be treated, on which it is supported with the perimetrical gasket 39. The saturated pressurized steam is then injected with pump 43', and the steam is later recovered from outlet 44 and re-inserted in the cycle. Once the operation on the treated area is complete, the panel is shifted to a successive area.

The invention has been described and illustrated with reference to fundamental concepts involved in the procedure and to a preferred form of the devices for placing it in operation. These may be varied in arrangment, size and proportion wihtout going beyond the bounds of this invention.

Claims:

1. Procedure for impregnating concrete and other materials through the polymerization of organic monomers of relatively low viscosity absorbed by prefabricated or in situ case objects of any type made of cement mixture or of other composition and materials such as wood, plaster, clay, etc., pre-treated, and then treated thermally, wherein the polymerization of said monomers is effected preferably by using saturated pressurized steam or, alternatively, treated hot water as the medium to perform said polymerization of said monomers, recovering this medium once the procedure is complete and re-inserting it in the cycle.

2. Procedure as claimed in claim 1, wherein the steam is constantly held saturated and under pressure.

3. Procedure as claimed in claim 1 or 2, wherein increasing the steam pressure accelerates the polymerization times.

4. Procedure as claimed in any one of claims 1, 2 and 3, wherein the steam is recovered and re-inserted in the cycle.

5. Procedure as claimed in claim 1, wherein the hot water is treated with a neutral organic salt.

0036397

6. Procedure as claimed in claim 1 or 5, wherein the resin residues precipitated in the hot water treated with a neutral organic salt are periodically removed.

7. Procedure as claimed in any one of claims 1, 5 and 6, wherein the hot water treated with a neutral organic salt is constantly re-inserted in the cycle.

8. Devices for carrying out the procedure as claimed in claim 1, wherein they are planned so that the dehydration and absorption respond perfectly to the requirements of the successive polymerization, as well as so that the drying guarantees that the phases of the procedure be completed unexceptionably and optimally.

9. Devices as claimed in claim 8, wherein for the treatment of objects prefabricated in plants or yards, they essentially comprise:
- a tunnel (1A), of dimensions suitable to the requirements of the specific case, made of brickwork or an insulated metallic material, in which the objects are dehydrated at temperatures up to 140-160°C;
- a basin (2A), made of concrete or steel, buried or not, to hold the monomer, of dimensions suitable to the requirements of the specific case, in which the object is impregnated for a period of time depending on the porosity of same;
- a steam chamber (3A), of dimensions suited to its purpose, perfect sealing, made of insulated metallic material, in which the monomer absorbed by the object is polymerized at temperatures up to 130-140°C, with maximum pressures of 2-3 atmospheres;

- a tunnel (4A), of dimensions suitable to the requirements of the specific case, made of brickwork or an insulated metallic material, in which the drying and so aging of the object occur, with temperatures up to 140-160°C.

10. Devices as claimed in claim 9, wherein when treated hot water must be used for the polymerization of the prefabricated objects, instead of the steam chamber (3A), a basin (3A) is installed made of concrete or metallic material to hold the 60-90°C treated hot water, in which there is a hydraulic batten of suitable dimensions and also a container for removing the precipitated particles of resin.

11. Devices as claimed in claim 8, wherein, for the dehydration and aging of objects cast in situ, a panel is provided comprising essentially a bearing framework (12) of a light metallic structure with external metallic transverse reinforcing (13) and with a framework with internal reinforcing; the panel is equipped with rings (1) for lifting it and metallic organs (7) for securing it to the structure (11) to be treated, with a reflecting carter (6) of insulated (8) metallic sheet, with an opening (9) for supplying hot air and, alternatively, with a coupling (10) for supplying electric current to the infrared lamps (5),

-27-

0036397

as well as an outlet (2) for the hot air and sealing perimetrical gasket.

12. Devices as claimed in claim 8, wherein for the impregnation of objects cast in situ and arranged horizontally, a panel is provided comprising essentially a framework (14) with sealing perimetrical gasket (15) to rest on the object (11), of which the short sides are provided with suitably positioned rings (16) to lift and move it, the long sides are provided with tracks (17) along which runs a carriage (18) in turn bearing along its length tracks (19) along which a carriage (20) runs orthogonally to carriage (18); carriage (20) supports an aspiration pump (21) connected hydrodynamically with a rose pipe (22) adjustable in height.

13. Devices as claimed in claim 8, wherein for the impregnation and polymerization with treated hot water of objects cast in situ and arranged vertically, a panel is provided comprising essentially a light metallic framework (23) with a carter (24) stamped or molded in light metallic sheet and with a perimetrical gasket (34) to rest on the object (11), said panel equipped with rings (25) on the top for lifting it and also with metallic organs (26) along its vertical edges to secure it to the object (11), as well as with transverse metallic tubes (27) equipped with pressure sprayers (27') for the monomer for the impregnation (or the treated hot water for the polymerization) brought in by the pump (29) through an external tubing (28); at the lower end of the carter (24) there is a discharge valve (32) for the monomer (or treated water) and a basin (33) for collecting it (or the treated water).

14. Devices as claimed in claim 8, wherein for the polymerization with saturated pressurized steam of objects cast in situ and arranged both horizontally and vertically, a panel is provided comprising a framework (36) with metallic cross pieces (36') and equipped with rings (37) for lifting it along its vertical edges and with metallic organs (38) for securing it to the object (11), with a carter (40) in light metallic or plastic material insulated along area (42) and with a delivery pump (43') for the saturated steam near the inlet (43) of the saturated steam supply; a steam outlet (44) is provided at the end of the same edge for its re-use, and a discharge valve (45) for the condensed steam is applied to the carter (40).

FIG.1

FIG.5

FIG.6

*FIG.2*

*FIG.4*

*FIG.3*

FIG.7

FIG.9

FIG.8

FIG.10

FIG.11

FIG.12

0036397

European Patent Office

**EUROPEAN SEARCH REPORT**

Application number

EP 81 83 0041.0

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| | DE - A1 - 2 816 576 (W.J. BRETT) <br> * page 6, lines 27 to 35 * <br> -- <br> DE - B2 - 2 363 257 (AMIANTUS AG) <br> * claims; column 2, lines 62 to 68 * <br> -- | 1,8 <br><br><br> 1,5,8 | C 04 B 41/28 <br> B 28 B 11/04 <br> B 27 K  3/00 |
| A | DD - A -  106 338 (LANGE et al.) <br> ---- | | |

TECHNICAL FIELDS
SEARCHED (Int. Cl.³)

B 27 K  3/00

B 28 B 11/00

C 04 B 41/00

CATEGORY OF
CITED DOCUMENTS

X: particularly relevant

A: technological background

O: non-written disclosure

P: intermediate document

T: theory or principle underlying
the invention

E: conflicting application

D: document cited in the
application

L: citation for other reasons

&: member of the same patent
family.
corresponding document

X The present search report has been drawn up for all claims

| Place of search | Date of completion of the search | Examiner |
|---|---|---|
| Berlin | 29-05-1981 | HÖRNER |

EPO Form 1503.1  06.78